Europäisches Patentamt

European Patent Office

Office européen des brevets

(19)

(11) Publication number: **0 152 659**
**B1**

(12) **EUROPEAN PATENT SPECIFICATION**

(45) Date of publication of patent specification: **01.06.88**

(51) Int. Cl.⁴: **B 23 B 5/16**

(21) Application number: **84300897.0**

(22) Date of filing: **13.02.84**

(54) **A trimming device.**

(43) Date of publication of application:
**28.08.85 Bulletin 85/35**

(45) Publication of the grant of the patent:
**01.06.88 Bulletin 88/22**

(84) Designated Contracting States:
**DE FR GB IT**

(56) References cited:
**CH-B- 552 902**
**US-A-2 253 905**
**US-A-3 636 803**
**US-A-3 661 472**
**US-A-3 807 258**
**US-A-4 076 446**

(73) Proprietor: **The Stanley Works Limited**
**Cory House The Ring**
**Bracknell, Berks. RG12 1AX (GB)**

(72) Inventor: **Gibbs, Andrew Robert**
**4 Post Office Lane**
**Stockton Nr. Rugby Warwickshire (GB)**

(74) Representative: **White, Martin David et al**
**MARKS & CLERK 57/60 Lincoln's Inn Fields**
**London WC2A 3LS (GB)**

Courier Press, Leamington Spa, England.

EP 0 152 659 B1

## Description

This invention relates to a trimming device of a type comprising trimming blade means and a holder holding the blade means and provided with means for guiding the blade means relative to an article to be trimmed, adapted to trim an end of a pipe by said guiding means being adapted to engage the pipe for relative rotation of the device and the pipe, two blade edge portions of the blade means being differently angled so as to vary the angle of the end surface of the pipe from an angle of bevel at the outside edge of the pipe to a different angle at the inside edge of the pipe, and the device being provided with at least one surface arranged to abut the end of the pipe so as to limit the depth of cut.

US—A—3 661 472 discloses a trimming device of the above-mentioned type, but of relatively complicated construction with adjustment knobs. It is not specifically designed for use on pipes of different diameters.

US—A—3 807 258 discloses a trimming device for use on pipes of different diameters, but it is not of the above-mentioned type and only gives a narrow chamfer to the outside corner of a pipe.

Tubular pipes of plastics material are manufactured for a variety of purposes, including plumbing and furniture construction kits. It is certain that at some stage these pipes will require to be accurately cut to length. Apart from special purpose workshop machines, the best and most usual method, is to use a fine tooth hand saw. However, when using this method it is difficult to cut accurately or square, and the finished ends are usually marred by burrs, scratches and swarf which have been created during the cutting process. The removal of these flaws is essential when the pipes are to be used for plumbing joints, as ragged edges can catch material passing through the pipe which may lead to blockages. Moreover, with the use of O-ring sealed joints, a lead-in bevel is necessary on the pipe to aid assembly and prevent damage to the seal. The cut ends of pipes are usually squared, cleaned, and bevelled, by the use of a file, but this produces an unsatisfactory standard of finish, especially on softer materials such as polypropylene. It is also a time consuming process which requires skill to effect a satisfactory square end.

According to the invention, the trimming device of the above-mentioned type is characterised in that said guiding means is adapted for engaging different pipes of respectively different diameters, in that said device comprises a portion of the holder located away from where the blade means acts upon the pipe, said holder portion being adapted to protrude inside a pipe of a predetermined first relatively large internal diameter and outside a pipe of a predetermined second, relatively small external diameter.

The invention will be described by way of example with reference to the accompanying drawings, wherein:—

Fig. 1 is a side elevation of a trimming device embodying the invention;

Fig. 2 is an end elevation of the trimming device;

Fig. 3 is an underneath plan view of the trimming device;

Fig. 4 is a plan view of the trimming device;

Fig. 5 is a section on line V—V of Fig. 2, showing the device being used on a pipe of small diameter;

Fig. 6 corresponds to Fig. 5 but showing the device being used on a pipe of large diameter;

Figs. 7 and 8 are diagrammatical "underneath plan" views (compare Fig. 3) corresponding respectively to Figs. 5 and 6;

Fig. 9 illustrates an angled blade which might possibly replace two separate blades in the device of Figs. 1 to 8; and

Fig. 10 illustrates a curved blade which might alternatively replace the said two blades.

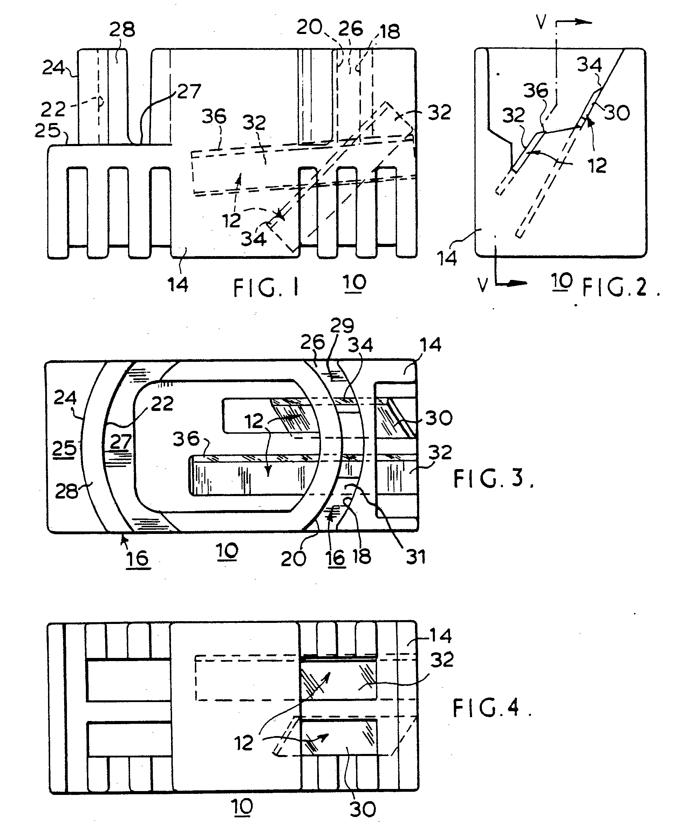

Referring to Figs. 1 to 8 of the drawings, the illustrated trimming device 10 comprises trimming blade means 12 and a holder 14 holding the blade means 12 and provided with means 16 for guiding the blade means 12 relative to a pipe 11 to be trimmed.

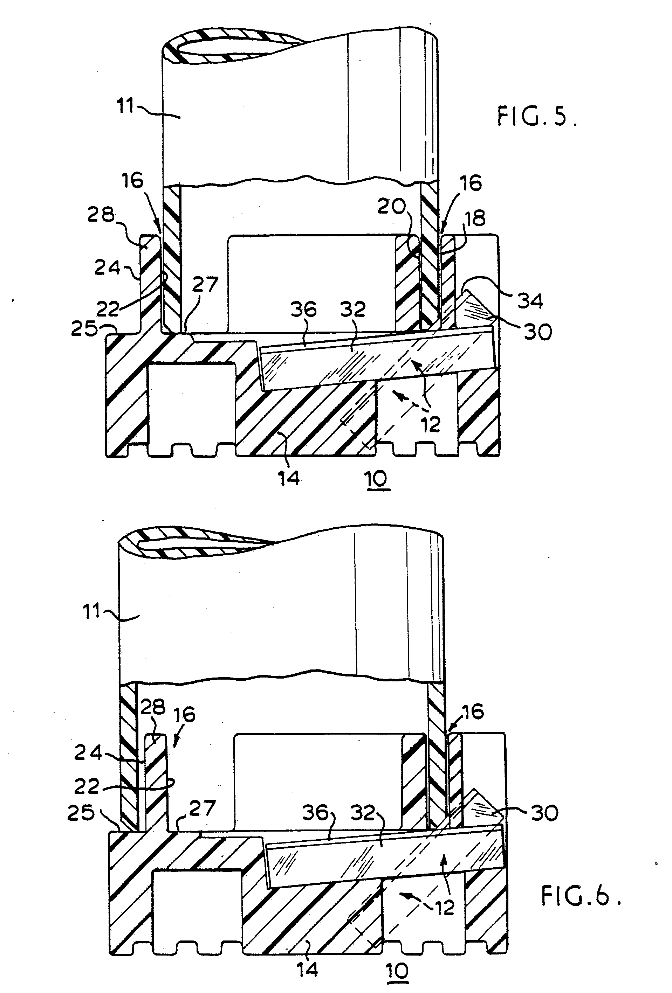

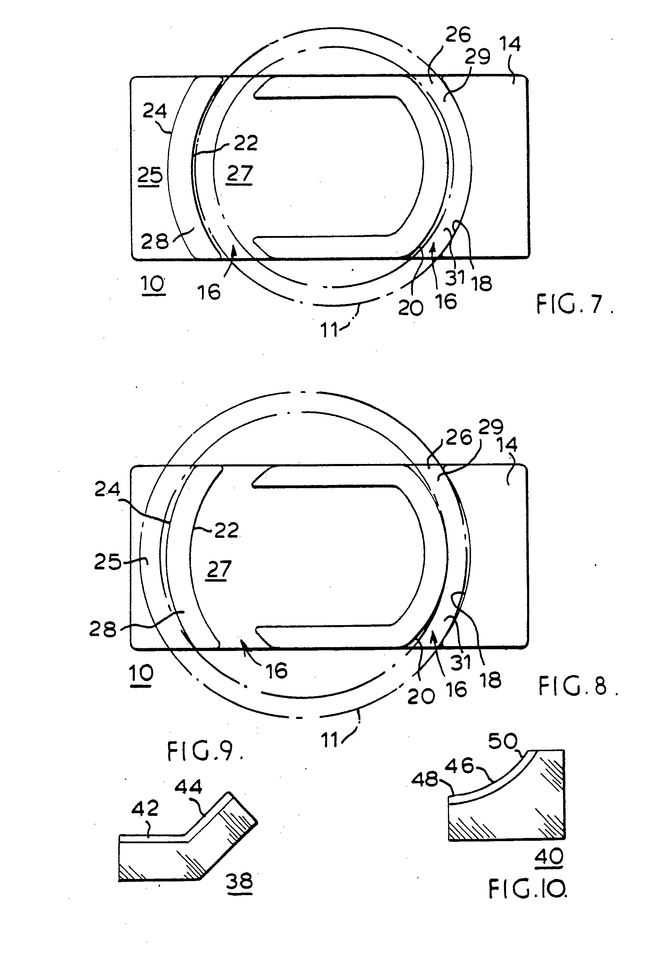

The trimming device 10 is specially adapted to trim an end of the pipe 11 by the fact that the guiding means 16 is adapted to engage the pipe 11 for relative rotation of the device 10 and the pipe 11. To this end, the holder 14, which is of molded plastics, has two curved guide walls 18 and 20 which are respectively concave and convex and define a part-circular slot 26 therebetween, in the region of the trimming blade means 12, to receive and guide one side of the pipe 11. As indicated above (see the introductions to Figs. 5 to 8) the device 10 is adapted for use with two different diameters of pipe, one of relatively small diameter (see Figs. 5 and 7) and the other of relatively large diameter (see Figs. 6 and 8). The slot 26 does not conform accurately to the size of either pipe, but is designed to provide sufficient points or areas of contact for each size of pipe with walls 18 and 20 to provide proper location of the pipe.

Further guidance may or may not be provided on the diametrically opposite side of the pipe by a curved rib 28 which projects outside of the small pipe (Figs. 5 and 7) and inside of the large pipe (Figs. 6 and 8) and has an inside (concave) surface 22 and an outside (convex) surface 24 which may or may not respectively engage the small pipe and/or the large pipe.

The blade means 12 is constituted by two separate blades 30 and 32. The angle of the blade 30 is fairly steep relative to the direction of the pipe 11 axis (vertical in Figs. 1, 2, 5 and 6) so that the cutting edge 34 of the blade 30 bevels the pipe end at the outside edge of the pipe 11. The blade 32, on the other hand, is almost square-on to the pipe end, so that its cutting edge 36 trims the pipe end almost flat at its inside edge.

Being part-cylindrical, the guide walls 18 and 20 function to maintain alignment between the device 10 and the pipe 11. Surfaces 25, 27, 29, 31 of device 10 are arranged to abut the pipe end as shown in Figs. 5 and 6 so as to limit the depth of cut.

The device 10 overcomes all the pipe end finishing problems without the need for special skills. Different sizes of the device can cater to a group of closely related pipe diameters and wall thicknesses. When in use, the device 10 is placed over the end of the roughly sawn pipe 11 and is rotated in a clockwise direction. The guide walls 18, 20 built into the device 10 maintain alignment with the sides of the pipe 11, enabling the two trimming blades 30, 32 which are held within it, to accurately cut away the pipe end. The blade angles are fixed so that blade 32 cuts the tube substantially square, to give an almost flat end and blade 30 cuts at 45°, to form a bevel on the outside edge. If the pipe 11 has been sawn out-of-square, or irregularly, the blades 30, 32 trim off the highest points as the device is rotated, until all the end is trimmed. By continuing to rotate the device 10, more material may be easily removed until an exact length is achieved. Thin shavings of swarf are ejected from the top of the device 10 during cutting. When the pipe has been trimmed to the desired length, the device is rotated in the same direction but with a slight negative pressure. The blades 30, 32 then disengage from the pipe 11, leaving a virtually unstepped finish with completely smooth and swarf-free surfaces.

The compact form of the device 10 enables it to be used on-site in many cramped situations.

Though the blades 30, 32 may be made to be removable, non-removable blades may be preferred since very little wear occurs even with protracted use.

Fig. 9 illustrates an angled blade 38, whilst Fig. 10 illustrates a curved blade 40, either of which by itself might replace the two separate blades 30, 32 in the device 10. The angled blade 38 has two angled cutting edges 42, 44 which would correspond to the two cutting edges 34, 36, whilst the curved blade 40 has a curved cutting edge 46, of which two spaced-portions as at 48, 50 would correspond to the two cutting edges 34, 36. In either case, the blade 38 or 40 would be positioned so as to vary the angle of the end surface of the pipe from an angle of bevel at the outside edge of the pipe to a different angle, preferably almost flat, at the inside edge of the pipe.

## Claims

1. A trimming device (10) comprising trimming blade means (12) and a holder (14) holding the blade means (12) and provided with means (16) for guiding the blade means (12) relative to an article (11) to be trimmed, adapted to trim an end of a pipe (11) by said guiding means (16) being adapted to engage the pipe (11) for relative rotation of the device (10) and the pipe (11), two blade edge portions (34, 36, 42, 44, 48, 50) of the blade means (12) being differently angled so as to vary the angle of the end surface of the pipe (11) from an angle of bevel at the outside edge of the pipe (11) to a different angle at the inside edge of the pipe (11), and the device being provided with at least one surface (25, 27, 29, 31) arranged to abut the end of the pipe (11) so as to limit the depth of cut, characterised in that said guiding means (16) is adapted for engaging different pipes of respectively different diameters, in that said device (10) comprises a portion (28) of the holder (14) located away from where the blade means (12) acts upon the pipe, said holder portion (28) being adapted to protrude inside a pipe of a predetermined first relatively large internal diameter and outside a pipe of a predetermined second, relatively small external diameter.

2. A trimming device (10) as claimed in claim 1 wherein said two blade edge portions (34, 36) are respectively of two separate blades (30, 32) constituting said blade means (12).

3. A trimming device (10) as claimed in claim 1 wherein said two blade edge portions (42, 44, 48, 50) are different edge portions of one and the same blade (38, 40) constituting said blade means (12).

4. A trimming device (10) as claimed in claim 3 wherein the blade has a rounded edge (46) of which said two blade edge portions (48, 50) are parts.

5. A trimming device (10) as claimed in claim 3 wherein the blade (38) has two edges (42, 44) meeting at an angle and respectively comprising said two blade edge portions.

6. A trimming device (10) as claimed in any preceding claim wherein one (36) of the two blade edge portions (34, 36) is angled so that the pipe end is at least approximately flat at and adjacent the inside edge of the pipe.

7. A trimming device (10) as claimed in any preceding claim wherein said guiding means (16) comprising at least two guide walls (18, 20) of the holder (14) adapted to engage the pipe wall to maintain alignment of the device (10) with the pipe (11).

## Patentansprüche

1. Abrichtvorrichtung (10) mit Abrichtmessereinrichtungen (12) und einem Halter (14), welcher die Abrichtmessereinrichtungen (12) haltert, und mit Führungseinrichtungen (16) zum Führen der Abrichtmessereinrichtungen (12) bezüglich eines abzurichtenden Gegenstandes versehen ist, wobei die Abrichtvorrichtung dadurch zum Abrichten eines Endes eines Rohres (11) geeignet ist, daß die Führungseinrichtungen (16) geeignet sind, das Rohr (11) derart zu erfassen, daß eine Relativdrehung von Abrichtvorrichtung (10) und Rohr (11) ermöglicht wird, mit zwei Messerkantenbereichen (34, 36, 42, 44, 48, 50) der Abrichtmessereinrichtungen (12), die derart unter unterschiedlichen Winkeln verlaufen, daß sich der Winkel der Endfläche des Rohres (11) von einem Konuswinkel an der Außenkante des Rohres (11) zu einem davon verschiedenen Winkel an der Innenkante des Rohres (11) ändert, und wobei die Abrichtvorrichtung mit mindestens einer Oberfläche (25, 27, 29, 31) versehen ist, die zum Abstützen des Endes des Rohres (11) ausgebildet ist, um die Tiefe des Schnittes zu begrenzen, dadurch gekennzeichnet, daß die Abrichtvorrichtung (10) einen Teil (28) des Halters (14) umfaßt, der im Abstand von der Stelle angeordnet ist, an der die Abrichtmessereinrichtungen (12) auf das Rohr (11) einwirken, wobei dieser Halterteil (28) geeignet ist, auf der Innenseite eines Rohres mit einem vorgegebenen, ersten, relativ großen Innendurchmesser und auf der Außenseite eines Rohres mit einem vorgegebenen, zweiten, relativ kleinen Außendurchmesser vorzustehen.

2. Abrichtvorrichtung (10) nach Anspruch 1, bei der die beiden Messerkantenbereiche (34, 36) zu zwei getrennten Messern (30, 32) gehören, welche die Abrichtmessereinrichtungen (12) bilden.

3. Abrichtvorrichtung (10) nach Anspruch 1, bei der die zwei Messerkantenbereiche (42, 44, 48, 50) verschiedene Kantenbereiche ein- und desselben Messers (38, 40) sind, welches die Abrichtmessereinrichtungen (12) bildet.

4. Abrichtvorrichtung (10) nach Anspruch 3, dadurch gekennzeichnet, daß das Messer eine abgerundete Schneidkante (46) aufweist, und daß die beiden Messerkantenbereiche (48, 50) Teile dieser Schneidkante sind.

5. Abrichtvorrichtung (10) nach Anspruch 3, bei der das Messer (38) zwei Kanten (42, 44) aufweist, die unter einem Winkel aufeinanderstoßen und jeweils einen der beiden Messerkantenbereiche umfassen.

6. Abrichtvorrichtung (10) nach einem der vorangehenden Ansprüche, bei der einer (36) der beiden Messerkantenbereiche (34, 36) unter einem solchen Winkel angeordnet ist, daß das Rohrende an der Innenkante des Rohres und angrenzend an dieselbe zumindest annähernd flach ist.

7. Abrichtvorrichtung (10) nach einem der vorangehenden Ansprüche, bei der die Führungseinrichtungen (16) mindestens zwei Führungswände (18, 20) des Halters (14) umfassen, welche geeignet sind, die Rohrwand zu erfassen, um eine fluchtende Ausrichtung der Abrichtvorrichtung (10) bezüglich des Rohres (11) aufrechtzuerhalten.

**Revendications**

1. Dispositif d'ébarbage (10) comprenant des moyens (12) formés de lames d'ébarbage et un support (14) maintenant les moyens (12) formés de lames et pourvus de moyens (16) de guidage des moyens (12) formés de lames par rapport à une pièce (11) à ébarber, adapté pour ébarber une extrémité de tube (11) par lesdits moyens de guidage (16), le dispositif étant adapté à s'engager avec le tube (11) en vue d'une rotation relative du dispositif (10) et du tube (11), deux parties du bord des lames (34, 36, 42, 44, 48, 50) des moyens (12) formés de lames ayant des angles différents de façon à faire varier l'angle de la surface d'extrémité du tube (11) d'un angle de biseau sur le bord extérieur du tube (11) à un angle différent sur le côté intérieur du tube (11), et le dispositif étant pourvu d'au moins une surface (25, 27, 29, 31) disposée pour venir en butée contre l'extrémité du tube (11) de façon à limiter la profondeur de coupe, caractérisé en ce que lesdits moyens de guidage (16) sont adaptés pour s'engager avec différents tubes de diamètres différents respectivement, et en ce que ledit dispositif (10) comprend une partie (28) du support (14) logée loin de l'endroit où les moyens (12) formés de lames agissent sur le tube, ladite partie de support (28) étant adaptée pour dépasser à l'intérieur d'un tube d'un premier diamètre intérieur relativement grand prédéterminé et à l'extérieur d'un tube d'un second diamètre extérieur relativement petit prédéterminé.

2. Dispositif d'ébarbage (10) comme revendiqué dans la revendication 1 dans lequel les deux parties du bord de lame (34, 36) sont respectivement sur deux lames séparées (30, 32) constituant lesdits moyens 12 formés de lames.

3. Dispositif d'ébarbage (10) comme revendiqué dans la revendication 1 dans lequel les deux parties du bord de lame (42, 44, 48, 50) sont différentes parties du bord d'une seule et même lame (38, 40) constituant lesdits moyens (12) formés de lames.

4. Dispositif d'ébarbage (10) comme revendiqué dans la revendication 3 dans lequel la lame a un bord incurvé (46) duquel les deux parties (48, 50) du bord de la lame font partie.

5. Dispositif d'ébarbage (10) comme revendiqué dans la revendication 3 dans lequel la lame (38) a deux bords (42, 44) formant entre eux un angle et comprenant respectivement lesdites deux parties du bord de lame.

6. Dispositif d'ébarbage (10) comme revendiqué dans l'une quelconque des revendications précédentes dans lequel l'une (36) des deux parties du bord de lame (34, 36) fait un angle tel que l'extrémité du tube est, au moins approximativement plat, sur le bord intérieur du tube et au voisinage de ce bord.

7. Dispositif d'ébarbage (10) comme revendiqué dans l'une quelconque des revendications précédentes dans lequel lesdits moyens de guidage (16) comprennent au moins deux parois de guidage (18, 20) du support (14) adaptées pour s'engager avec la paroi du tube pour maintenir l'alignement du dispositif.

0 152 659

FIG. 1

FIG. 2.

FIG. 3.

FIG. 4.

1

FIG.5.

FIG.6.

FIG. 7.

FIG. 8.

FIG. 9.

FIG. 10.